(19) Europäisches Patentamt
European Patent Office
Office européen des brevets

(11) EP 1 789 525 B1

(12) **EUROPEAN PATENT SPECIFICATION**

(45) Date of publication and mention of the grant of the patent:
**23.11.2011 Bulletin 2011/47**

(21) Application number: **05794018.1**

(22) Date of filing: **01.09.2005**

(51) Int Cl.:
***C11D 3/37*** *(2006.01)*
***B32B 3/24*** *(2006.01)*
***C11D 3/43*** *(2006.01)*
***C11D 11/00*** *(2006.01)*
***C11D 3/22*** *(2006.01)*

(86) International application number:
**PCT/US2005/031161**

(87) International publication number:
**WO 2006/028912 (16.03.2006 Gazette 2006/11)**

(54) **PREMOISTENED DISPOSABLE WIPE**

VORBEFEUCHTETES EINWEG-WISCHTUCH

CHIFFON JETABLE HUMIDIFIE AU PREALABLE

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.09.2004 US 606820 P**

(43) Date of publication of application:
**30.05.2007 Bulletin 2007/22**

(73) Proprietor: **The Procter & Gamble Company**
**Cincinnati, OH 45202 (US)**

(72) Inventors:
- **PANANDIKER, Rajan, Keshav**
**West Chester, Ohio 45069 (US)**
- **KUPNESKI, Michael, Joseph**
**Maineville, Ohio 45039 (US)**
- **ANTOUN, Sharon, Rae**
**Harrison, Ohio 45030 (US)**
- **MICHELS, Alice, Jean**
**Cincinnati, Ohio 45248 (US)**
- **FERESHTEHKHOU, Saeed**
**Cincinnati, Ohio 45243 (US)**
- **EDE, Susan, Tyler**
**Cincinnati, Ohio 45243 (US)**

(74) Representative: **Kellenberger, Jakob**
**NV Procter & Gamble**
**Services Company S.A.**
**Intellectual Property Department**
**Temselaan 100**
**1853 Strombeek-Bever (BE)**

(56) References cited:
**WO-A-01/45615**
**WO-A-97/29178**
**WO-A-97/32004**
**US-A- 5 895 504**
**US-A1- 2003 139 320**
**US-A1- 2003 216 272**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 789 525 B1

## Description

### Field

The present invention relates to premoistened disposable wipes for household use. The present invention also relates to a method for cleaning household fabric-based materials utilizing the premoistened wipes of the present invention.

### Background

One difficulty associated with utilizing wipes for cleaning fabric-based materials around the house is that in many instances the wipes are too harsh on the fabric, they fray, lint, or fall apart during usage, and/or they do not effectively remove surface dirt and contamination from the fabric.

For instance, it is known to impregnate a cleaning solution that includes water, a volatile cleaning agent, and a surfactant into a wipe formed from hydrophobic materials such as polypropylene and polyester. The wipe may also include a hydrophobic binder such as an acrylic latex binder. One drawback of this is that given its hydrophobic nature, the wipe will have inadequate capacity to hold cleaning solution. Another drawback is that the wipe is unable to adequately transfer the cleaning liquid to the fabric. Yet further, this type of system tends to disperse the dirt and contamination on and/or into the fabric rather than actually remove it from the fabric. WO 0145615 discloses a premoistered disposable cleaning wipe for cleaning and refreshing fabric comprising a layered apertured laminate substrate and a composition wherein the layered substrate has hydrophobic outer layer and hydrophilic inner layer.

The present invention addresses these drawbacks by providing a premoistened disposable wipe which effectively removes surface dirt and contamination without leaving behind lint while being gentle on the fabric. This and other features, aspects, advantages, and variations of the present invention will become evident to those skilled in the art from a reading of the present disclosure with the appended claims and are covered within the scope of the claims.

### Summary

The present invention relates to a premoistened disposable wipe according to claim 1 for cleaning household fabric-based materials.

### Brief Description of the Drawings

FIG. 1 is a perspective view of one embodiment of a premoistened wipe substrate of the present invention.
FIG. 2 is a cross-sectional view of a portion of the wipe substrate of FIG. 1.
FIG. 3 is a magnified detail view of one bond site of a laminate substrate of the present invention.
FIG. 4 is a top plan view of another embodiment of the laminate substrate of the present invention.
FIG. 5 is a cross-sectional view of a portion of the laminate substrate shown In FIG. 4.

### Detailed Description

Reference will now be made in detail to various embodiments of the present invention, examples of which are illustrated in the accompanying drawings wherein like numerals indicate the same elements throughout the views. All percentages, ratios and proportions herein are on a weight basis unless otherwise indicated.

Except as otherwise noted, all amounts including quantities, percentages, portions, and proportions, are understood to be modified by the word "about", and amounts are not intended to indicate significant digits.

Except as otherwise noted, the articles "a", "an", and "the" mean "one or more".

As used herein, the terms "cleaning sheet", "premoistened disposable wipe", and "premoistened wipe", and "wipe" may be used interchangeably to refer to the present invention.

As used herein, "comprising" means that other steps and other ingredients which do not affect the end result can be added. This term encompasses the terms "consisting of" and "consisting essentially of". The compositions and methods/processes of the present invention can comprise, consist of, and consist essentially of the essential elements and limitations of the invention described herein, as well as any of the additional or optional ingredients, components, steps, or limitations described herein.

As used herein the term "fabric" encompasses articles of fabric including but not limited to: clothing, upholstery, linen, draperies, clothing accessories, leather, floor coverings, and the like. The term also encompasses other items

made in whole or in part of fabric, including but not limited to tote bags, furniture covers, leather upholstery and other leather products, automobile interiors, tarpaulins, shoes, and the like.

As used herein, the term "disposable" is used to describe articles which are not intended to be laundered or otherwise restored but rather are intended to be discarded after use.

As used herein, the term "nonwoven" refers to a substrate that has a structure of individual fibers or threads which are interlaid, but not in any regular or repeating manner. Nonwoven substrates may be formed by a variety of processes including but not limited to meltblowing processes, spunbonding processes, and bonded carded processes.

As used herein, the term "unitary substrate" refers to a layered substrate formed from two or more webs of material, including nonwoven webs, that are sufficiently joined, such as by thermal bonding means, to be handled, processed, or otherwise utilized, as a single web.

As used herein, the term "microfibers", refers to small diameter fibers having an average diameter not greater than about 100 microns.

As used herein, the term "meltblown fibers", refers to fibers formed by extruding a molten thermoplastic material through a plurality of fine, usually circular, die capillaries as molten threads or filaments into a high velocity gas (e.g., air) stream which attenuates the filaments of molten thermoplastic material to reduce their diameter, which may be to a microfiber diameter. Thereafter, the meltblown fibers are carried by the high velocity gas stream and are deposited on a collecting surface to form a web of randomly dispersed meltblown fibers.

As used herein, the term "spunbonded fibers", refers to small diameter fibers which are formed by extruding a molten thermoplastic material as filaments from a plurality of fine, usually circular, capillaries of a spinneret with the diameter of the extruded filaments then being rapidly reduced by drawing.

As used herein, the term "unitary web" refers to a layered web comprising two or more webs of material, including nonwoven webs, that are sufficiently joined, such as by thermal bonding means, to be handled, processed, or otherwise utilized, as a single web.

As used herein, "laminate" and "composite" are used interchangeably to describe substrates of the present invention. Both refer to a substrate formed from at least two webs joined in a face to face relationship to form a multiple-layer unitary web.

As used herein, the term "polymer" generally includes, but is not limited to, homopolymers, copolymers, such as, for example, block, graft, random and alternating copolymers, terpolymers, etc., and blends and modifications thereof. Furthermore, unless otherwise specifically limited, the term "polymer" shall include all possible geometrical configurations of the material. These configurations include, but are not limited to, isotactic, syndiaotactic and random symmetries.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

## Premoistened Disposable Wipe

The premoistened disposable wipe of the present invention comprises a laminate substrate and a composition which is applied thereto.

### A. Laminate Substrate

The laminate substrate of the present invention may be made in accordance with U.S. Publication No. 2003/0028165 published In the name of Curro et al. on February 6, 2003 and U.S. Publication No. 2002/0034912 published in the name of Curro et al. on March 21, 2002. The laminate substrate of the present invention typically has a basis weight of 40 grams/$m^2$ to 250 grams/$m^2$ or from 50 gram/$m^2$ to 120 grams/$m^2$ as measured in accordance with ASTM D3776-96 and a caliper of from 0.3 mm to 2 mm. The laminate substrate of the present invention has a liquid holding capacity of 1 gram of liquid/gram of substrate to 10 grams of liquid/gram of substrate, or 2 grams of liquid/gram of substrate to 8 grams of liquid/gram of substrate, or 3 grams of liquid to 5 grams of liquid/gram of substrate and has a fuzz level of less than 0.8 mg/$cm^2$, or less than 0.5 mg/$cm^2$ or less than 0.3 mg/$cm^2$. The substrate has a dry cross direction ("CD") stiffness value of from 0.01 g-cm to 2 g-cm and a wet cross direction stiffness value of from .005 g-cm to 2 g-cm, or from 0.1 g-cm to 1.5 g-cm.

In one non-limiting embodiment of the present invention the laminate substrate is formed from a laminate web 10 comprising at least three layers or plies, disposed in a layered, face-to-face relationship, as shown in FIG. 1. The layers should be sufficiently thin to be processible such as described in U.S. Publication No. 2003/0028165, but no actual thickness (i.e., caliper) is considered limiting. A first outer layer 20, is typically thermally bondable, and may be a

nonwoven web comprising a sufficient quantity of thermoplastic material, the web having a predetermined extensibility and elongation to break. By "sufficient quantity" is meant a quantity of thermoplastic material adequate to enable enough thermal bonding upon application of heat and/or pressure to produce a unitary web. A second outer layer, **40,** is typically the same material as first outer layer **20,** but may be a different material. Second outer layer, **40** is also generally thermally bondable and has a predetermined extensibility and elongation to break. At least one third central layer **30** may be disposed between the two outer layers.

First outer layer, **20,** and second outer layer, **40,** may be hydrophobic while central layer, **30,** may be hydrophilic. In one non-limiting example the two outer layers may be comprised of a hydrophobic material including but not limited to polyester, polypropylene or a combination thereof while the one or more Inner layers may be comprised of a hydrophilic material including but not limited to wood pulp, rayon, or a combination thereof. While not wishing to be limited by theory, it is believed that by having hydrophobic outer layers and one or more hydrophilic inner layers, the wipe can better regulate the amount of moisture that is released from the wipe upon contact with a surface versus a wipe which is entirely hydrophilic or has a hydrophilic outer layer. Additionally, it is believed that a hydrophilic inner layer will serve as a storage core which may allow for better retention of contaminants removed from surfaces thereby helping to prevent redeposition of these contaminants versus a wipe which is entirely hydrophobic or has a hydrophobic inner layer.

The laminate web **10** is processed by joining means, such as by ultrasonic welding, or thermal calendaring as described in U.S. Publication No. 2003/0028165 to provide a plurality of melt bond sites **50** that serve to couple the outer layers **20** and **40,** and, in some embodiments, portions of central layer **30**, thereby forming the constituent layers into a unitary web. When joined together, the two outer layers form an interior region between them. The interior region is the space between the outer layers surrounding the bond sites **50.** In one non-limiting embodiment, the third central layer **30** substantially fills the interior region, the third central layer **30** being apertured coincident the bond sites **50.**

The laminate web **10** is nonwoven web and composite. In principle the laminate web **10** can be made out of any web materials that meet the requirements, (*e.g.*, melt properties, extensibility) as disclosed herein.

For example, the outer layers **20** and **40** can be thermoplastic films, micro-porous films, apertured films, and the like. Central layer **30** can be comprised of wood pulp/paper, including but not limited to tissue paper; metal, including metal foil; other non-thermoplastic web material, woven fabric, and the like. In general, it is required that outer layer materials be flexible enough to be processed as described herein. However, central layer can be a brittle, relatively stiff material, as long at it also can be processed as described herein, albeit possibly becoming fractured, broken, or otherwise broken up in the process. One of the unexpected advantages of the present invention, is the discovery that novel web properties can be exhibited by the choice of central layer 30 disposed between the two outer layers.

The laminate substrate may be apertured, non-apertured, or a combination thereof. The laminate substrate may have an average aperture size of from 0.1 $mm^2$ to 4 $mm^2$ or from 0.5 $mm^2$ to 2.5 $mm^2$. The percentage of the laminate which is comprised of apertures may be express as the percent open area. The percent open area of the laminate of the present invention may be from 2 % to 25% or from 5% to 20%. In one non-limiting embodiment as shown in cross-section in FIG. 2, central layer **30** can be apertured, without aperturing the two outer layers to provide a three-layer laminate characterized by the laminate web **10** (as a whole) being unapertured, while the central layer **30** is apertured. Importantly, the web of the present invention can be made by the method of the present invention without requiring registration of the layers to ensure bonding of the outer layers through the apertures of the central layer(s). One way of describing one embodiment of a web **10** as described above, is that the unitary web **10,** when viewed orthogonally by the un-aided human eye from a distance of approximately 50 cm, exhibits no apertures or perforations through the entire laminate, but bond sites **50** are nevertheless visible.

The laminate web **10** is further characterized in that the joining of the three plies into a unitary web can be achieved in the absence of adhesive. Thus in some embodiments no adhesive is required to bond the plies together. Joining is achieved by the input of energy into the constituent layers, such as by thermal melt bonding of the two outer layers together at the melt bond sites **50.** In other embodiments, the energy input can be via ultrasonic bonding. Accordingly, one benefit of the present invention is the provision of a laminate web, that is a unitary web, formed without the use of adhesives. Not only does this simplify processing and lower the cost of the laminate web, when certain materials such as nonwoven webs are used, it results in a more flexible, softer web.

As shown in FIG. 2, central layer **30** is chosen such that when the constituent web layers of laminate web **10** are processed by the method of the present invention, portions of central layer **30** in the region of the melt bond sites **50** separate to permit the first outer layer **20** to melt bond directly to the second outer layer **40** at the interface of the two materials **52** at melt bond sites **50.** Thus, apertures In the central layer **30** are formed in the lamination step by displacement, just prior to the bonding of the outer layers as detailed by the method of the present invention below. In this manner, central layer **30** can be provided as an unapertured web, avoiding complex registration steps to align apertures in registry with bond sites when laminated. Further, central layer **30** need not be thermally compatible with outer layers **20** and **40.** Central layer need not be a thermoplastic materials, and need not even have a melting point. It simply needs to be displaceable by the forces exerted by the processing equipment as detailed below. Therefore, one way of describing the laminate web of the present invention is to distinguish the central layer as being a material differentiated from the

materials of the first or second layers by at least one material property selected from thermal properties, elongation properties, elastic properties, or conductive properties. By "thermal properties" it is meant primarily thermal melt properties, such that the central layer has no melting point, or if it has a melting point, it is typically at least 10 degrees Centigrade higher, or 20 degrees Centigrade higher than either outer layer, or 100 degrees Centigrade higher than either outer layer. By "elongation properties" it is meant that in tension, the material of the central layer exhibits an elongation to break that is at least 10% less than either outer layer, or 50% less than either outer layer, or can be more than 100% less than either outer layer. Thus, the central layer can be extensible, while either outer layer can be highly extensible. By "elastic properties" it is meant that the central layer can be, for example, elastic, while either outer layer can be highly elastic, as defined herein. Or the central layer can be non-elastic, and the outer layers elastic or highly elastic. By "conductive properties" as used herein it is meant electrically conductivity, such that the central layer can have an electrical conductivity that is 10 times as great as the outer layers or 100 or more times as great as the outer layers. Conductive properties may be facilitated by the central layer being a metallic foil, or by being a conductive polymer, including a conductive nonwoven web.

Another advantage of the method of the present invention is that, in some embodiments, e.g., for solid core central layer **30** materials (i.e., a continuous sheet, that is, not having substantial apertures, gaps, or other voids), it results in a unitary web having an apertured central layer **30** in full, intimate contact with the outer layers **20,** and **40.** By "full" and "intimate" it is meant that central layer **30** fills all the unbonded regions between outer layers **20** and **40** such that outer layers **20** and **40** do not contact except at the bond sites **50.** Of course, it is recognized that many materials of interest have significant air content, and filling "all" the unbonded region between outer layers **20** and **40** is not meant to imply that all air content is removed.

Central layer **30** can be involved, or participate, in the bonding between outer layers **20** and **40.** By "involved" is meant that the central layer can, to some extent, be in intimate contact with, and possibly partially merged with, one or both immediate outer layers. The involvement may be due to actual melt bonding about the perimeter of bond site **50** (e.g., for thermoplastic central layers **30**), or it may be due to mechanical interaction, such as by entanglement (e.g., for cellulosic fibrous central layer **30** between fibrous nonwoven layers), also about the perimeter of bond site **50.** In one non-limiting embodiment of the present invention, when a central layer of tissue paper is used, the resulting laminate is a soft, bulky, absorbent web.

Without being bound by theory, it is believed that the process of the present invention facilitates such separation of central layer **30** by shearing, cutting, or otherwise fracturing the central layer **30,** and displacing the material of the central layer **30** sufficiently to permit thermal bonding of the two outer layers **20** and **40.** Thus, central layer **30** is chosen to have properties that permit such displacement. Therefore, central layer **30** will typically have one or more of the properties of relatively low extensibility, relatively high frangibility, or relatively high deformability, such that the material of central layer **30** can be "squeezed" or otherwise displaced out of the region of thermal bond sites **50.** Importantly, it is not required that the central layer **30** be melted out of the region of the thermal bond sites. Thus, central layer can be elastic, highly elastic, extensible, or highly extensible, depending on the desired end results and purposes of the resulting unitary web.

Without being bound by theory, it is believed that to accomplish the displacement of central layer **30** to form apertures therein and to bond the outer layers, the thermal point calendaring as described in U.S. Publication No. 2003/0028165 should form thermal bond sites having a narrow width **W** dimension and a high aspect ratio. For example, FIG. 3 shows the melt area of a single melt bond site **50** having a narrow width dimension **W and** a high aspect ratio, *i.e.*, the length, **L**, is much greater than the width, **W.** The length **L** should be selected to permit adequate bond area while width **W** is sufficiently narrow such that the protuberance used to form the bond site (as described below) can cut, shear, displace, or otherwise pierce the central layer **30** at the region of the bond sites by the method described below. Width **W** can be between about 0.003 inches (.008 cm) and about 0.020 inches (.050 cm) or between about 0.005 inches (.012 cm) and about 0.010 inches (.025 cm), and may be adjusted depending on the properties of central layer **30.**

It is believed that the aspect ratio of melt bond site **50** can be as low as about 3 (i.e., ratio of **L/W** equals 3/1). It can also be between about 4 and 20. It is believed that the aspect ratio of the melt bond sites **50** is limited only by the corresponding aspect ratio of the point bonding protuberances of the calendaring roller(s), as disclosed in U.S. Publication No. 2003/0028165.

In one embodiment, the longitudinal axis of each bond site, **l,** which corresponds directionally to the length dimension of bond site **50,** is disposed in a regular, repeating pattern oriented generally parallel to the machine direction, **MD** as shown in FIG. 1. But the longitudinal axis of each bond site may be disposed in a regular, repeating pattern oriented in the cross machine direction, or randomly oriented in a mixture of cross and machine directions. In one non-limiting example, the bond sites **50** can be disposed in a "herringbone" pattern.

When nonwoven webs are used as constituent layers of laminate **10,** an important distinction should be drawn between bond sites **50** which bond together outer layers **20** and **40** by the method of the present invention, and thermal bond sites that may be present in the constituent layers themselves. For example, nonwoven webs are typically consolidated by thermal bonding in a regular pattern of discrete spaced apart fused bonding areas, such as the pattern

disclosed in U.S. Patent No. 3,855,046 to Hansen et al., and the patterns shown generally in FIGS. 10 and 11 of U.S. Patent No. 5,620,779 to Levy et al. Other films, nonwoven webs, and the like may have thermal embossments for aesthetic reasons. Therefore, in the unitary web **10** there may be many thermal bond sites, some of which are bond sites **50,** and others which are bond sites in the base nonwoven, for example.

A further benefit of the present invention is obtained when the non-apertured thermally bonded laminate web described above is stretched or extended in a direction generally orthogonal to the longitudinal axis, **I,** of melt bond sites **50.** The melt bonding at the melt bond sites **50** tends to make localized weakened portions of the web at the bond sites. Thus, as portions of the web **10** are extended in a direction generally orthogonal to the longitudinal axis I of bond sites **50,** the material at the bond site fails in tension and an aperture is formed. The relatively high aspect ratio of melt bond sites **50,** permits a relatively large aperture to be formed upon sufficient extension. When the laminate web **10** is uniformly tensioned, the result is a regular pattern of a plurality of apertures **60** corresponding to the pattern of melt bond sites **50.**

FIG. 4 shows a partially cut-away representation of an apertured laminate of the present invention. As shown, the partial cut-away permits each layer or ply to be viewed in a plan view. The laminate web **10** shown in FIG. 4 is produced after the thermally bonded laminate is stretched in a direction orthogonal to the longitudinal axis of the melt bond sites, in this case, in the cross-machine direction, **CD** with sufficient elongation in the direction of extension to cause apertures to form. As shown, where formerly there were melt bond sites **50,** apertures **60** are produced as the relatively weak bond sites fail in tension. Also as shown, central layer **30** can remain generally uniformly distributed within laminate **10,** depending on the material properties of central layer **30.** For example, if central layer **30** is more extensible than outer layers **20** or **40,** then it simply extends, either elastically or by plastic deformation, but remains generally uniformly distributed in the unapertured regions of web **10.** For example, if a thermoplastic film is utilized as the central layer **30,** it extends, either extensibly or elastically (depending on the type of film), but can remain generally uniform, for example, in density or basis weight.

When apertures **60** are formed, the thermally bonded portions of outer layers **20** and **40** remain primarily on the portions of the aperture perimeters corresponding to the length dimension of bond sites **50.** Therefore, each aperture **60** does not have a perimeter of thermally bonded material, but only portions remain bonded, represented as **62** in FIG. 4. One beneficial property of such a laminate web is that once apertured, fluid communication with the central layer is facilitated. Thus, an absorbent central layer **30** can be used between two relatively non-absorbent outer layers, and the laminate **10** could be an absorptive wiper with a relatively dry to the touch outer surface.

To the extent that central layer **30** is involved, or participates, in any bonding between outer layers **20** and **40,** it also participates in the remnant of bonded portions **62,** as shown in FIG. 4. The involvement may be due to some degree of actual melt bonding about the perimeter of bond site **50** (e.g., for thermoplastic central layers **30**), or it may be due to mechanical interaction, such as by entanglement (e.g., for cellulosic fibrous central layer **30** between fibrous nonwoven layers).

FIG. 5 is a schematic representation of the cross-section denoted in FIG. 4. As shown, apertures **60** form when the laminate web is elongated in the direction **T.**

An example of one embodiment of a unitary web having a central layer having an elongation to break less than either of the two outer layers, and less than the actual magnitude of extension, is shown partially cut-away in FIG. 5. The partial cut-away permits each layer or ply to be viewed in a plan view. As shown, after extension, central layer **30** becomes fragmented, forming discontinuous regions of the central layer material. These discontinuous regions may be relatively uniformly distributed, such as in rows as shown in FIG. 5, or may be relatively randomly distributed, depending on the pattern of melt bond sites **50,** the physical properties of central layer **30,** and the method of extension employed.

One example of a web **10** having a structure similar to that shown in FIG. 5 is a web having outer layers of relatively extensible nonwovens, with a central layer of relatively low extensibility tissue paper. Such a laminate would be an apertured laminate web having an absorbent central core, wherein the absorbent core material is in fluid communication with regions exterior to the laminate web. If a relatively hydrophobic nonwoven web is used for the outer layers, such a wipe could exhibit dry-to-the-touch properties along with high absorbency.

One example of a web **10** having a structure similar to that shown in FIG. 5 is a web having outer layers of relatively extensible nonwovens, with a central layer of relatively low extensibility tissue paper. One particularly interesting structure incorporates a highly hydrophobic outer layer combined with a highly absorbent central layer. A suitable hydrophobic material is described in U.S. Patent No. 3,354,022 Dettre et al. Such a material has a water repellent surface having an intrinsic advancing water contact angle of more than 90 degrees and an intrinsic receding water contact angle of at least 75 degrees. Such a material exhibits highly hydrophobic properties, similar to the effect known to exist on leaves from the Lotus plant. When such a material is combined with an absorbent central layer, one non-limiting example of which is a BOUNTY® paper towel tissue layer, the resulting composite can be highly absorbent while retaining a very clean and dry outer surface. The basis weight and porosity of the outer layer can be varied to achieve different degrees of absorbent performance.

B. Composition

The laminate substrate of the present invention is moistened with an aqueous liquid composition comprised of from 0.001 % to 0.5% flocculating polymer, from 0.25% to 10% of a nonvolatile organic solvent and optionally from 0.001% to 2% by weight of a surfactant and/or from 0.001% to 1% perfume. Up to 2% of other optional ingredients may be included as part of the aqueous liquid. Non-limiting examples of these other optional ingredients include detersive builders, enzymes, enzyme stabilizers (non-limiting examples of which include propylene glycol, boric acid and/or borax), foam control agents, soil suspending agents, soil release agents, pH adjusting agents, chelating agents, phase stabilizers, solubilizers, brighteners, preservatives, antimicrobial agents, coloring agents, and mixtures thereof.

If desired, the aqueous liquid composition may also optionally include microencapsulated actives. One or more active may be contained within a single microencapsulate. Different active-containing microencapsulates may also be used. The aqueous liquid composition may be comprised of from 0.01% to 10% by weight of the microencapsulated active (i.e.; based on the microcapsule and the active contained therein), or from 0.025% to 5% by weight of the microencapsulated active, or from 0.05% to 1% by weight of the microencapsulated active. Non-limiting examples of microencapsulated actives include perfume, surfactant, silicone, antimicrobial agents, antiallergenic agents, emmolients, softening agents, conditioning agents, preservatives, and the like. Microencapsulated actives suitable for use in the present invention include but are not limited to those disclosed in U.S. Application Serial No. 60/685,815 filed on May 31, 2005.

The ratio of the mass of the liquid composition to the mass of the laminate substrate is in the range of from 10:1 to 1:1 or from 6:1 to 3:1.

Without being bound by theory, it is believed that the flocculating polymer is irreversibly adsorbed on the cellulosic component of the wipe so as to flocculate the dirt away from the surface being cleaned thereby holding the dirt and contaminants in the interior of the substrate. As the cellulosic layer forms the central ply of the web it is not in direct contact with the fabric being cleaned. This prevents the dirt from being smeared on the fabric. Further, the nonvolatile solvent solubilizes the surface dirt and makes it easier to be removed. Being nonvolatile, the solvent allows sufficient working time before the fabric dries out. This allows the user sufficient time to clean the fabric before the composition dries thereby alleviating excessive reapplication of the composition. This allows for more efficient cleaning with a single wipe.

While not wishing to bound by theory It is believed that it is undesirable to overload the laminate substrate with flocculating polymer as the polymer may have a tendency to be released onto the surface being cleaned thereby allowing for the dirt and contaminants to be flocculated/remain on the fabric being cleaned.

Flocculating Polymer

Compositions and systems of the present invention comprise from 0.001%, to 0.5%, or from 0.01 to 0.1 % of a flocculating polymer, wherein said polymer comprises at least one cationically charged unit, *inter alia*, quaternary ammonium moiety or unit which can form a cationic charge in situ, *inter alia*, an amine moiety. Stated in another way, the oligomer, polymer, or co-polymer resulting from the herein below described monomer units have one net cationic charge at a pH = 7. The charge can be distributed among any of the herein described units.

The flocculating polymer adsorbs irreversibly on the non-woven substrate and helps flocculate or trap the dirt on it. This prevents the dirt from being smeared around on the surface that is being cleaned.

Cationic polymers in general and their method of manufacture are known in the literature. For example, a detailed description of cationic polymers can be found in an article by M. Fred Hoover that was published in the Journal of Macromolecular Science-Chemistry, A4(6), pp 1327-1417, October, 1970. The entire disclosure of the Hoover article is incorporated herein by reference. Other suitable cationic polymers are those used as retention aids in the manufacture of paper. They are described in "Pulp and Paper, Chemistry and Chemical Technology Volume III edited by James Casey (1981). The Molecular weight of these polymers is in the range of 2000-5 million.

The flocculating polymers of this invention will be better understood when read in light of the Hoover article and the Casey book, the present disclosure and the Examples herein.

Suitable flocculating polymers are

1. polyethyleneimine and its derivatives. These are commercially available under the trade name Lupasol ex. BASF AG of Ludwigschaefen. Germany.

2. Polyamidoamine-epichlorohydrin (PAE) Resins which are condensation products of polyalkylenepolyamine with polycarboxyic acid. The most common PAE resins are the condensation products of diethylenetriamine with adipic acid followed by a subsequent reaction with epichlorohydrin. They are available from Hercules Inc. of Wilmington DE under the trade name Kymene or from BASF A.G. under the trade name Luresin.

These polymers are described in Wet Strength resins and their applications edited by L. L. Chan, TAPPI Press (1994).

Linear Polymer Units

3. Synthetic addition polymers of the general structure

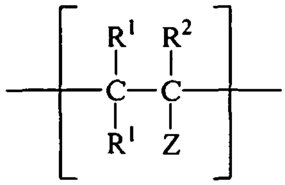

wherein $R^1$, $R^2$, and Z are defined herein below. The linear polymer units are typically formed from linearly polymerizing monomers. Linearly polymerizing monomers are defined herein as monomers which under standard polymerizing conditions result in a linear polymer chain or alternatively which linearly propagate polymerization. The linearly polymerizing monomers of the present invention have the formula:

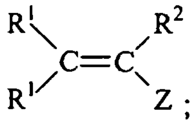

however, those of skill in the art recognize that many useful linear monomer units are introduced indirectly, inter alia, vinyl amine units, vinyl alcohol units, and not by way of linearly polymerizing monomers. For example, vinyl acetate monomers once incorporated into the backbone are hydrolyzed to form vinyl alcohol units. For the purposes of the present invention, linear polymer units may be directly introduced, i.e. via linearly polymerizing units, or indirectly, i.e. via a precursor as in the case of vinyl alcohol cited herein above.

Each $R^1$ is independently hydrogen, $C_1$-$C_4$ alkyl, substituted or unsubstituted phenyl, substituted or unsubstituted benzyl, carbocyclic, heterocyclic, and mixtures thereof. Preferably $R^1$ is hydrogen, $C_1$-$C_4$ alkyl, phenyl, and mixtures thereof, more preferably hydrogen and methyl.

Each $R^2$ is independently hydrogen, halogen, $C_1$-$C_4$ alkyl, $C_1$-$C_4$ alkoxy, substituted or unsubstituted phenyl, substituted or unsubstituted benzyl, carbocyclic, heterocyclic, and mixtures thereof. Preferred $R^2$ is hydrogen, $C_1$-$C_4$ alkyl, and mixtures thereof.

Each Z is independently hydrogen; hydroxyl; halogen; $-(CH_2)_mR$, wherein R is hydrogen, hydroxyl, halogen, nitrite, $-OR^3$, $-O(CH_2)_nN(R^3)_2$, $-O(CH_2)_nN^+(R^3)X^-$, $-OCO(CH_2)_nN(R^3)_2$, - $OCO(CH_2)_nN^+(R^3)_3X^-$, $-C(O)NH-(CH_2)_nN(R^3)_2$, $-C(O)NH(CH_2)N^+(R^3)_3X^-$, $-(CH_2)_nN(R^3)_2$,$-(CH_2)_nN^+(R^3)_3X^-$, a non-aromatic nitrogen heterocycle comprising a quaternary ammonium ion, a non-aromatic nitrogen heterocycle comprising an N-oxide moiety, an aromatic nitrogen containing heterocyclic wherein one or more or the nitrogen atoms is quaternized; an aromatic nitrogen containing heterocycle wherein at least one nitrogen is an N-oxide; -NHCHO (formamide), or mixtures thereof; wherein each $R^3$ is independently hydrogen, $C_1$-$C_8$ alkyl, $C_2$-$C_8$ hydroxyalkyl, and mixtures thereof; X is a water soluble anion; the index n is from 1 to 6; carbocyclic, heterocyclic, or mixtures thereof; - $(CH_2)_mCOR'$ wherein R' is $-OR^3$, $-O(CH_2)_nN(R^3)_2$, $-O(CH_2)_nN^+(R^3)_3X^-$, $-NR^3(CH_2)_nN(R^3)_2$,$-NR^3(CH_2)_nN^+(R^3)X^-$ $-(CH_2)_nN(R^3)_2$, $-(CH_2)_nN^+(R^3)_3X^-$, or mixtures thereof, wherein $R^3$, X, and n are the same as defined herein above. A preferred Z is $-O(CH_2)_nN^+(R^3)_3X^-$, wherein the index n is 2 to 4. The index m is from 0 to 6, preferably 0 to 2, more preferably 0.

Non-limiting examples of addition polymerizing monomers comprising a heterocyclic Z unit includes 1-vinyl-2-pyrrolidinone, 1-vinylimidazole, 2-vinyl-1,3-dioxolane, 4-vinyl-1-cyclohexene1,2-epoxide, and 2-vinylpyridine.

The polymers and co-polymers of the present invention comprise Z units which have a cationic charge or which result in a unit which forms a cationic charge *in situ.* When the co-polymers of the present invention comprise more than one Z unit, for example, $Z^1$, $Z^2$,...$Z^n$ units, at least about 1% of the monomers which comprise the copolymers will comprise a cationic unit. Preferred cationic units include $-O(CH_2)_nN^+(R^3)_3X$ and $-(CH_2)_nN^+(R^3)_3X^-$. When the co-polymers of the present invention are formed from two monomers, $Z^1$ and $Z^2$, the ratio of $Z^1$ to $Z^2$ is preferably from about 9:1 to about 1:9.

A non-limiting example of a Z unit which can be made to form a cationic charge in situ is the -NHCHO unit, formamide. The formulator can prepare a polymer or copolymer comprising formamide units some of which are subsequently hydrolyzed to form vinyl amine equivalents. For example the formulator may prepare a co-polymer having the general formula:

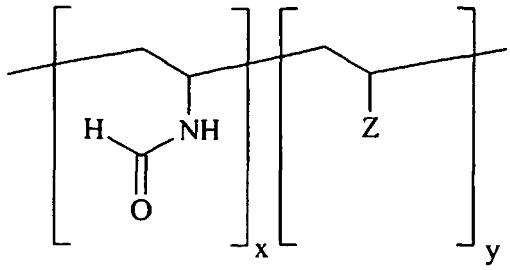

which comprises a formamide unit and then subsequently treat the co-polymer such that some of the formamide units are hydrolyzed to form a co-polymer comprising vinyl amine units, said polymer having the formula:

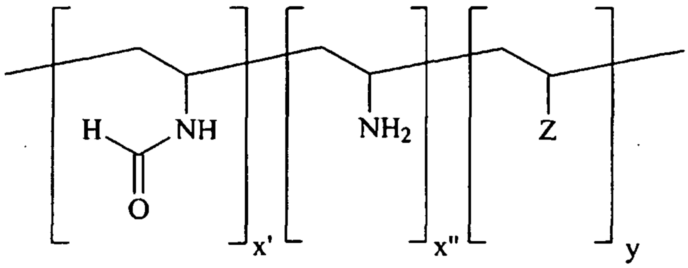

wherein Z may be a cationic unit comprising or non-cationic unit comprising moiety and x'+x"=x.

Another class of preferred linearly polymerizable monomers comprise cationically charged heteroaromatic Z units having the formula:

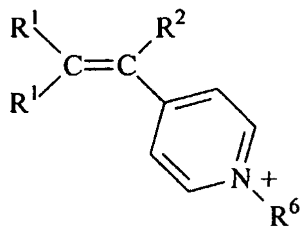

an non-limiting example of which is 4-vinyl (N-alkyl)pyridine wherein $R^1$ and $R^2$ are each hydrogen and $R^6$ is methyl.

Another class of preferred linearly polymerizable monomers which comprises a heterocyclic ring includes Z units comprising an N-oxide, for example, the N-oxide having the formula:

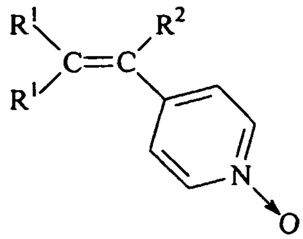

a non-limiting example of which is 4-vinyl pyridine N-oxide.

N-alkyl vinylpyridine monomers and N-oxide vinylpyridine monomers can be suitably combined with other non aromatic monomers, *inter alia*, vinyl amine. However, preferred polymers of the present invention include co-polymers derived from a combination of quaternized, N-oxide, and nitrogen containing heteroaromatic monomers, non-limiting

examples of which includes a copolymer of N-methyl vinyl pyridine and vinyl pyridine in a ratio of 4:1; a copolymer of N-methyl vinyl pyridine and vinyl pyridine in a ratio of 4:6; a co-polymer of poly(N-methyl vinyl pyridine) and vinyl pyridine N-oxide in a ratio of polymer to monomer of 4:1; poly(N-methyl vinyl pyridine) and vinyl pyridine N-oxide in a ratio of polymer to monomer of 4:6; and mixtures thereof.

As described herein above, some preferred polymer residues may be formed by treatment of the resulting polymer. For example, vinyl amine residues are preferably introduced via formamide monomers which are subsequently hydrolyzed to the free amino unit. Also vinyl alcohol units are obtained by hydrolysis of residues formed form vinyl acetate monomers. Likewise, acrylic acid residues may be esterified after polymerization, for example, units having the formula:

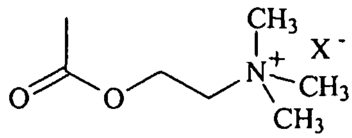

may be more conveniently formed after the backbone has been formed by polymerization with acrylic acid or acrylic acid precursor monomers.

II) Cyclic Units Derived from Cyclically Polymerizing Monomers

The polymers or co-polymers of the present invention can comprise one or more cyclic polymer units which are derived from cyclically polymerizing monomers. Cyclically polymerizing monomers are defined herein as monomers which under standard polymerizing conditions result in a cyclic polymer residue as well as serving to linearly propagate polymerization. Preferred cyclically polymerizing monomers of the present invention have the formula:

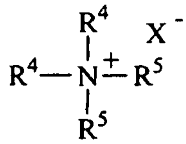

wherein each $R^4$ is independently an olefin comprising unit which is capable of propagating polymerization in addition to forming a cyclic residue with an adjacent $R^4$ unit; $R^5$ is $C_1$-$C_{12}$ linear or branched alkyl, benzyl, substituted benzyl, and mixtures thereof; X is a water soluble anion.

Non-limiting examples of $R^4$ units include allyl and alkyl substituted allyl units. Preferably the resulting cyclic residue is a six-member ring comprising a quaternary nitrogen atom.

$R^5$ is preferably $C_1$-$C_4$ alkyl, preferably methyl.

An example of a cyclically polymerizing monomer is dimethyl diallyl ammonium having the formula:

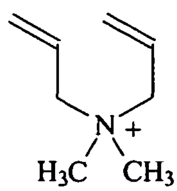

which results in a polymer or co-polymer having units with the formula:

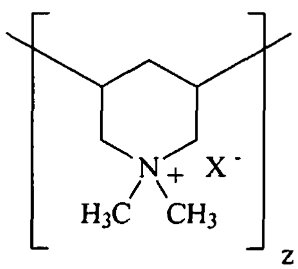

wherein preferably the index z is from about 10 to about 50,000.

III) Mixtures thereof.

The polymers or co-polymers of the present invention retain a net cationic charge, whether the charged is developed *in situ*, or whether the polymer or co-polymer itself has a formal positive charge. Preferably the polymer or co-polymer has at least 10%, more preferably at least about 25%, more preferably at least about 35%, most preferably at least about 50% of the residues comprise a cationic charge.

The polymers or co-polymers of the present invention can comprise mixtures of linearly and cyclically polymerizing monomers, for example the poly(dimethyldiallylammonium chloride/acrylamide) co-polymer having the formula:

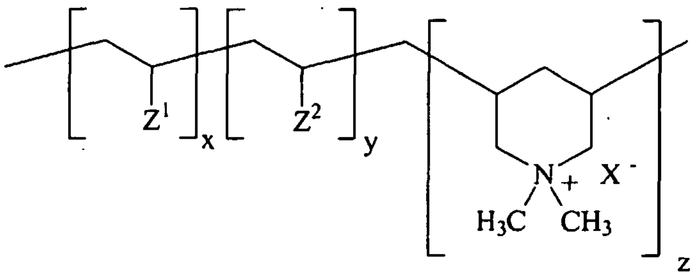

wherein $Z^1$, $Z^2$, x, y, and z are the same as defined herein above and X is chloride ion.

One embodiment of this invention is the composition comprising a polymer based on dimethyldiallylammonium chloride and a copolymer which is based upon acrylamide with a co-monomer selected from the group consisting of N, N dialkylaminoalkyl(meth)acrylate, N, N dialkylaminoalkylacrylate, N,N dialkylaminoalkylacrylamide, N,N dialkylaminoalkyl(meth)acrylamide, their quaternized derivatives and mixtures thereof.

Non-limiting examples of polymers suitable for use with the present invention include flocculating copolymers comprising:

i) a first monomer selected from the group consisting of N, N dialkylaminoalkyl(meth)acrylate, N, N dialkylaminoalkylacrylate, N,N dialkylaminoalkylacrylamide, N,N dialkylaminoalkyl(meth)acrylamide, their quaternized derivatives, vinylamine or its derivatives, allylamine or its derivatives and mixtures thereof; and

ii) a second monomer selected from the group consisting of acrylic acid, methacrylic acid, $C_1$-$C_6$ alkylmethacrylate, $C_1$-$C_6$ alkyl acrylate, $C_1$-$C_8$ hydroxyalkylacrylate, $C_1$-$C_8$ hydroxyalkylmethacrylate, acrylamide, $C_1$-$C_{16}$ alkyl acrylamide, $C_1$-$C_{16}$ dialkylacrylamide, 2-acrylamido-2-methylpropane sulfonic acid or its alkali salt, methacrylamide, $C_1$-$C_{16}$ alkylmethacrylamide, $C_1$-$C_{16}$ dialkylmethacrylamide, vinyl formamide, vinylacetamide, vinyl alcohol, $C_1$-$C_8$ vinylalkylether, vinyl pyridine, itaconic acid, vinyl acetate, vinyl propionate, vinyl butyrate and mixtures thereof;

4. Cationic polysaccharides preferably cationic hydroxyethyl cellulose, cationic guar gum and cationic starches.

Examples of cationic hydroxyehtyl cellulose is Ucare Polymer JR 25M, Polymer JR 400, Polymer LK 400 and Polymer LR 400 all available from Dow Chemicals Co and Celquat H200 and Celquat L-200 available from National Starch and Chemical Company or Bridgewater, NJ.

Examples of cationic guar gums are Jaguar C13 and Jaguar Excel available from Rhodia Examples of cationic starches are described by D. B. Solarek in Modified Starches, Properties and Uses published by CRC Press (1986). Cationic starches are commercially available from National Starch and Chemical Company under the Trade Name Cato.

Surfactant

The compositions herein may comprise from 0.001% to 2% by weight of a detersive surfactant. Preferably such compositions comprise from 0.01% to 0.5% by weight of surfactant. Detersive surfactants are preferably, zwitterionic or amphoteric or nonionic type or can comprise compatible mixtures of these types. Detergent surfactants useful herein are described in U.S. Patent 3,664,961. Norris, issued May 23, 1972, U.S. Patent 3,919,678, Laughlin et al., issued December 30, 1975, U.S. Patent 4,222,905, Cockreil, issued September 16, 1980, and in U.S. Patent 4,239,659, Murphy, issued December 16, 1980. All of these patents are incorporated herein by reference.

Non-limiting examples of nonionic surfactants include:

a) $C_{12}$-$C_{18}$ alkyl ethoxylates, such as, NEODOL® nonionic surfactants from Shell;

b) $C_6$-$C_{12}$ alkyl phenol alkoxylates wherein the alkoxylate units are a mixture of ethyleneoxy and propyleneoxy units;

c) $C_{12}$-$C_{18}$ alcohol and $C_6$-$C_{12}$ alkyl phenol condensates with ethylene oxide/propylene oxide block polymers such as Pluronic® from BASF:

d) $C_{14}$-$C_{22}$ mid-chain branched alcohols, BA, as disclosed in U.S. Patent No. 6,150,322;

e) $C_{14}$-$C_{22}$ mid-chain branched alkyl alkoxylates, $BAE_x$. wherein x 1-30, as disclosed in U.S. Patent Nos.: 6,153,577, 6,020,303, and 6,093,856;

f) alkyl polysaccharides as disclosed in U.S. Patent No. 4,565,647 issued to Llenado on January 26, 1986; specifically alkylpolyglycosides as disclosed in U.S. Patent Nos.: 4,483,780 and 4,483,779;

g) Polyhydroxy fatty acid amides as disclosed in U.S. Patent No. 5,332,528, WO 92/06162, WO 93/19146, WO 93/19038, and WO 94/09099;

h) ether capped poly(oxyalkylated) alcohol surfactants as disclosed in U.S. Patent No. 6,482,994 and WO 01/42408.

Preferred surfactants for use herein are the alkyl polysaccharides that are disclosed in U.S. Patent Nos.: 5,776,872, entitled "Cleansing compositions", issued July 7, 1998, to Giret et al.; 5,883,059, entitled "Three in one ultra mild lathering antibacterial liquid personal cleansing composition" issued March 16, 1999, to Furman et al.; 5,883,062, entitled "Manual dishwashing compositions", issued March 16, 1999, to Addison et al.; and 5,906,973, entitled "Process for cleaning vertical or inclined hard surfaces" issued May 25, 1999, to Ouzounis et al.

Suitable alkylpolysaccharides for use herein are disclosed in U.S. Patent No. 4,565,647, issued to Llenado on Jan. 21, 1986, having a hydrophobic group containing from about 6 to about 30 carbon atoms, preferably from about 10 to about 16 carbon atoms and a polysaccharide, e.g., a polyglycoside, hydrophilic group. For acidic or alkaline cleaning compositions/solutions suitable for use in no-rinse methods, the preferred alkyl polysaccharide preferably comprises a broad distribution of chain lengths, as these provide the best combination of wetting, cleaning, and low residue upon drying. This "broad distribution" is defined by at least 50% of the chainlength mixture comprising from 10 carbon atoms to 16 carbon atoms. Preferably, the alkyl group of the alkyl polysaccharide consists of a mixtures of chainlength, preferably from 6 to 18 carbon atoms, more preferably from 8 to 16 carbon atoms, and hydrophilic group containing from about one to 1.5 saccharide, preferably glucoside, groups per molecule. This "broad chainlength distribution" is defined by at least 50% of the chainlength mixture comprising from 10 carbon atoms to 16 carbon atoms. A broad mixture of chain lengths, particularly $C_8$-$C_{16}$, is highly desirable relative to narrower range chain length mixtures, and particularly versus lower (i.e., $C_8$-$C_{10}$ or $C_8$-$C_{12}$) chainlength alkyl polyglucoside mixtures. It is also found that the preferred $C_{8-16}$ alkyl polyglucoside provides much improved perfume solubility versus lower and narrower chainlength alkyl polyglucosides, as well as other preferred surfactants, including the $C_8$-$C_{14}$ alkyl ethoxylates. Any reducing saccharide containing 5 or 6 carbon atoms can be used, e.g., glucose, galactose and galactosyl moieties can be substituted for the glucosyl moieties. (optionally the hydrophobic group is attached at the 2-, 3-, 4-, etc. positions thus giving a glucose or galactose as opposed to a glucoside or galactoside.) The intersaccharide bonds can be, e.g., between the one position of the additional saccharide units and the 2-, 3-, 4-, and/or 6- positions on the preceding saccharide units. The glycosyl is preferably derived from glucose.

Optionally, and less desirably, there can be a polyalkyleneoxide chain joining the hydrophobic moiety and the polysaccharide moiety. The preferred alkyleneoxide is ethylene oxide. Typical hydrophobic groups include alkyl groups, either saturated or unsaturated, branched or unbranched containing from 8 to 18, preferably from 10 to 16, carbon atoms. Preferably, the alkyl group is a straight-chain saturated alkyl group. The alkyl group can contain up to about 3 hydroxyl groups and/or the polyalkyleneoxide chain can contain up to about 10, preferably less than 5, alkyleneoxide moieties. Suitable alkyl polysaccharides are octyl, nonyldecyl, undecyldodecyl, tridecyl, tetradecyl, pentadecyl, hexadecyl, heptadecyl, and ocladecyl, di-, tri-, tetra-, penta-, and hexaglucosides and/ or galatoses. Suitable mixtures include coconut alkyl, di-, tri-, tetra-, and pentaglucosides and tallow alkyl tetra-, penta- and hexaglucosides.

To prepare these compounds, the alcohol or alkylpolyethoxy alcohol is formed first and then reacted with glucose, or a source of glucose, to form the glucoside (attachment at the 1-position). The additional glycosyl units can then be attached between their 1-position and the preceding glycosyl units 2-,3-, 4- and/or 6-position, preferably predominantly the 2-position.

In the alkyl polyglycosides, the alkyl moieties can be derived from the usual sources like fats, oils or chemically produced alcohols while their sugar moieties are created from hydrolyzed polysaccharides. Alkyl polyglycosides are the condensation product of fatty alcohol and sugars like glucose with the number of glucose units defining the relative hydrophilicity. As discussed above, the sugar units can additionally be alkoxylated either before or after reaction with the fatty alcohols. Such alkyl polyglycosides are described in detail in WO 86/05199 for example. Technical alkyl polyglycosides are generally not molecularly uniform products, but represent mixtures of alkyl groups and mixtures of monosaccharides and different oligosaccharides. Alkyl polyglycosides (also sometimes referred to as "APG's") are preferred for the purposes of the invention since they provide additional improvement in surface appearance of the surface being cleaned relative to other surfactants. The glycoside moieties are preferably glucose moieties. The alkyl substituent is

preferably a saturated or unsaturated alkyl moiety containing from 8 to 18 carbon atoms, preferably from 8 to 10 carbon atoms or a mixture of such alkyl moieties. $C_8$-$C_{16}$ alkyl polyglucosides are commercially available (e.g., Simusol® surfactants from Seppic Corporation, 75 Quai d'Orsay, 75321 Paris, Cedex 7, France, and Glucopon®425 available from Henkel). In the present invention, the preferred alkyl polyglucosides are those which have been purified enough for use in personal cleansing. Most preferred are "cosmetic grade" alkyl polyglucosides, particularly $C_8$ to $C_{16}$ alkyl polyglucosides, such as Plantaren 2000®. Plantaren 2000 N®, and Plantaren 2000 N UP®, available from Henkel Corporation (Postfach 101100, D 40191 Dusseldorf, Germany).
Additional suitable nonionic surfactants include polyhydroxy fatty acid amides of the formula:

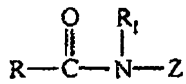

wherein R is a $C_{9-17}$ alkyl or alkenyl, $R_1$ is a methyl group and Z is glycityl derived from a reduced sugar or alkoxylated derivative thereof. Examples are N-methyl N-1-deoxyglucityl cocoamide and N-methyl N-1-deoxyglucityl oleamide. Processes for making polyhydroxy fatty acid amides are known and can be found in U.S. Patent No. 2,965,576 issued to Wilson and U.S. Patent No. 2,703,798 issued to Schwartz.

Zwitterionic Surfactants

Non-limiting examples of zwitterionic surfactants include: derivatives of secondary and tertiary amines, derivatives of heterocyclic secondary and tertiary amines, or derivatives of quaternary ammonium, quaternary phosphonium or tertiary sulfonium compounds. See U.S. Patent No. 3,929,678 issued to Laughlin et al., granted on December 30, 1975 at column 19, line 38 through column 22, line 48, for examples of zwitterionic surfactants; betaine, including alkyl dimethyl betaine and cocodimethyl amidopropyl betaine, $C_8$ to $C_{18}$ (preferably $C_{12}$ to $C_{18}$) amine oxides and sulfo and hydroxy betaines, such as N-alkyl-N,N-dimethylammino-1-propane sulfonate where the alkyl group can be $C_8$ to $C_{18}$, preferably $C_{10}$ to $C_{14}$.

Ampholytic Surfactants

Non-limiting examples of ampholytic surfactants include: aliphatic derivatives of secondary or tertiary amines, or aliphatic derivatives of heterocyclic secondary and tertiary amines in which the aliphatic radical can be straight- or branched-chain. One of the aliphatic substituents contains at least about 8 carbon atoms, typically from about 8 to about 18 carbon atoms, and at least one contains an anionic water-solubilizing group, e.g. carboxy, sulfonate, sulfate. See U.S. Patent No. 3,929,678 to Laughlin et al., issued December 30, 1975 at column 19, lines 18-35, for examples of ampholytic surfactants.

Anionic Surfactants

Nonlimiting examples of anionic surfactants useful herein include:

a) $C_{11}$-$C_{18}$ alkyl benzene sulfonates (LAS);
b) $C_{10}$-$C_{20}$ primary, branched-chain and random alkyl sulfates (AS);
c) $C_{10}$-$C_{18}$ secondary (2,3) alkyl sulfates having formulae (I) and (II):

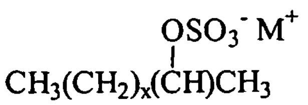

(I)

or

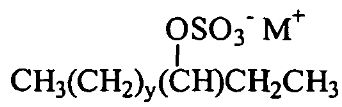

(II)

M in formulae (I) and (II) is hydrogen or a cation which provides charge neutrality. For the purposes of the present invention, all M units, whether associated with a surfactant or adjunct ingredient, can either be a hydrogen atom or a cation depending upon the form isolated by the artisan or the relative pH of the system wherein the compound is used. Non-limiting examples of preferred cations include sodium, potassium, ammonium, and mixtures thereof. Wherein x in formulae (I) and (II) is an integer of at least about 7, preferably at least about 9; y in formulae (I) and (II) is an integer of at least 8, preferably at least about 9;

d) $C_{10}$-$C_{18}$ alkyl alkoxy sulfates ($AE_xS$) wherein preferably x is from 1-30;
e) $C_{10}$-$C_{18}$ alkyl alkoxy carboxylates preferably comprising 1-5 ethoxy units;
f) mid-chain branched alkyl sulfates as disclosed in U.S. Patent Nos. 6,020,303 and 6,060,443;
g) mid-chain branched alkyl alkoxy sulfates as disclosed in U.S. Patent Nos. 6,008,181 and 6,020,303;
h) modified alkylbenzene sulfonate (MLAS) as disclosed in: WO 99/05243, WO 99/05242, WO 99/05244, WO 99/05082, WO 99/05084, WO 99/05241, WO 99/07656, WO 00/23549, and WO 00/23548.;
i) methyl ester sulfonate (MES); and
j) alpha-olefin sulfonate (AOS)

Cationic Surfactants

Non-limiting examples of anionic surfactants include: the quaternary ammonium surfactants, which can have up to 26 carbon atoms.

a) alkoxylate quaternary ammonium (AQA) surfactants as disclosed in U.S. Patent No. 6,136, 769;
b) dimethyl hydroxyethyl quaternary ammonium as disclosed in U.S. Patent No. 6,004,922;
c) polyamine cationic surfactants as dislosed in WO 98/35002, WO 98/35003, WO 98/35004, WO 98/35005, and WO 98/35006;
d) cationic ester surfactants as disclosed in U.S. Patent Nos. 4,228,042, 4,239,660 4,260,529 and 6,022,844; and
e) amino surfactants as disclosed in U.S. Patent No. 6,221,825 and WO 00/47708, specifically amido propyldimethyl amine.

Semi-Polar Nonionic Surfactants

Non-limiting examples of semi-polar nonionic surfactants include: water-soluble amine oxides containing one alkyl moiety of from 10 to 18 carbon atoms and 2 moieties selected from the group consisting of alkyl groups and hydroxyalkyl groups containing from 1 to 3 carbon atoms; water-soluble phosphine oxides containing one alkyl moiety of from 10 to 18 carbon atoms and 2 moieties selected from the group consisting of alkyl groups and hydroxyalkyl groups containing from 1 to 3 carbon atoms; and water-soluble sulfoxides containing one alkyl moiety of from 10 to 18 carbon atoms and a moiety selected from the group consisting of alkyl and hydroxyalkyl moieties of from 1 to 3 carbon atoms. See WO 01/32816. U.S. 4,681,704, and U.S. 4,133,779.

Non-volatile Organic Solvent

The compositions can also include one or more non-volatile organic solvents at effective levels, typically from 0.25% by weight of the composition to 15% by weight of the composition, or from 0.5% by weight of the composition to 10% by weight of the composition, or from 1% by weight of the composition to 5%, by weight of the composition. The surfactant provides cleaning and/ or wetting even without an organic cleaning solvent present. However, the cleaning can normally be further improved by the use of the right organic cleaning solvent.

For the purpose of this patent, the non-volatile organic solvent has a vapor pressure of less than about 0.1 mm of mercury at 20°C or has a boiling point of at least 230°C. Due to their low volatility, these solvents tend not to evaporate rapidly and allow sufficient "working" time for the wipe before it dries out. Preferred solvents are esters and glycol ethers. The most preferred solvents are glycol ethers of high boiling point.

Such solvents typically have a terminal $C_3$-$C_6$ hydrocarbon attached to from two to three alkylene glycol moieties to provide the appropriate degree of hydrophobicity, high boiling point (or low vapor pressure) and, preferably, surface activity. Examples of commercially available hydrophobic cleaning solvents based on alkylene glycol chemistry include Triethyleneglycol monomethyl ether (Methoxytriglycol ether from Dow Chemicals), Diethylene glycol monoethyl ether (Carbitol Solvent from Dow Chemicals), Triethyleneglylcol monoethyl ether (Ethoxytriglycol from Dow Chemicals), diethyleneglycol butylether (Butyl Carbitol), Triethyleneglycol monobutyl ether (Butoxytriglycol ether), Diethyleneglycol monohexyl ether (Hexyl Carbitol), ethylene glycol phenyl ether (Dowanol EPh), Dipropyleneglycol methyl ether (Dowanol DPM). Tripropylene glycol methyl ether (Dowanol TPM), Dipropylene glycol methylether acetate (Dowanol DPMA), Dipropylene glycol n Propyl ether (Dowanol DPnP), Tripropyleneglycol n propyl ether (Dowanol TPnP), dipropyleneglycol n-butyl ether(Dowanol DPnB), Tripropylene glycol n-butyl ether (Dowanol TPnB), Propyleneglycol phenyl ether (Dowanol PPh). These solvents are commercially available from Dow Chemicals (1691 N. Swede Road, Midland, Michigan).

Additional solvents of this class are available from Clariant GmbH of Werk Gendorf, Germany. Examples include Methyl tetraglycol (from Clariant GmbH), and buyl polyglycol (from Clariant GmbH).

Other suitable solvents include but are not limited to alkyl pyrrolidone.

**Method of Treating Household Fabric-Based Materials With the Premoistened**

**Disposable Wipe Article of the Present Invention**

The present invention also includes a method for treating the household fabric-based materials with the premoistended wipe of the present invention. This includes contacting the wipe to the surface to be cleaned, applying the composition to the surface to be cleaned, and transferring the dirt and contaminants from the surface to be cleaned to the wipe.

**Kit**

The premoistened disposable wipe of the present invention may also optionally be provided in conjunction with an implement as a kit for cleaning household fabric-based materials around the house. In use, a user will typically attach the premoistened disposable wipe to the implement to facilitate cleaning. One non-limiting suitable implement which may be used in conjunction with the present invention is disclosed in U.S. Patent Application Serial No. 60/670,440 filed on April 12, 2005.

**Self-Instructing Article of Commerce**

The present invention also encompasses an article of commerce comprising the premoistened disposable wipe as described herein. The article of commerce may also include the premoistened disposable wipe described herein and the cleaning implement described above. A set of instructions may be included in association with the article of commerce which directs the user to follow the method of cleaning fabric around the house with the premoistened disposable wipe and/or the premoistened disposable wipe in conjunction with a cleaning implement. For instance, in one non-limiting embodiment, such instructions may direct the user to attach a premoistened disposable wipe to the implement and contact the area(s) of the fabric to be cleaned with the cleaning article.

Herein, "in association with", when referring to such instructions, means the instructions are either directly printed on the implement and/or the wipe; directly printed on the packaging for the implement and/or the premoistened disposable disposable wipe; printed on a label attached to the packaging for the implement and/or the premoistened disposable wipe; or presented in a different manner including, but not limited to, a brochure, print advertisement, electronic advertisement, broadcast or internet advertisements; and/or other media, so as to communicate the set of instructions to a consumer of the implement and/or the premoistened disposable wipe.

**Methods**

Method for Determining Capacity

Capacity may be measured using the following technique which is adapted from EDANA 10.1. A 2 inch x 6 inch (5 cm x 15 cm) sample of the substrate is cut, weighed and immersed in distilled water for 3 minutes. The sample is then removed and allowed to drip for 10 seconds and reweighed. The absorption capacity of the substrate reported in grams of liquid absorbed in the substrate per gram of substrate is calculated by the following equation:

$$(\text{wet weight of substrate} - \text{dry weight of substrate}) / \text{dry weight of substrate} .$$

Method for Determining Fuzz Level

This method can be used as a quantitative prediction of the level of fuzz associated with nonwoven or laminate materials. The fuzz level may be determined in accordance with the Fuzz Level Test disclosed in U.S. Publication No. 2002/0119720.

Method for Determining Caliper

Caliper is measured in accordance with EDANA (European Disposables and Nonwovens Association) Method 30.5-99 using a caliper foot pressure of 0.5 kPA. An instrument suitable for this purpose is the ProGage thickness tester available from Thwing-Albert Instrument Company of Philadelphia, Pennsylvania.

Method for Determining Stiffness

Stiffness of a dry substrate is measured in accordance with ASTM D5650-97 entitled "Standard Test Method for Resistance to Bending of Paper of Low Bending Stiffness (Taber- Type Tester in 0 - 10 Taber Stiffness Unit Configuration)". A suitable instrument for measuring stiffness per this method is a V-5 Teledyne Taber Stiffness Tester (model 150-B) available from Teledyne Taber Instruments of North Tonawanda, New York. If it is desired to determine the stiffness of a wet substrate, ASTM D5650-97 is modified by immersing each sample of substrate to be tested in distilled water for 3 minutes. The sample is then removed and allowed to drip for 10 seconds. Stiffness is then measured in accordance with ASTM D5650-97.

Method for Determining the Average Aperture Size and the % Open Area of the Substrate

The following method can be used for determining the average size (i.e.; area) of the aperture in a substrate and the % open area of the substrate.

Apparatus:

HP Scanjet TMA 3970 scanner (or equivalent scanner with ≥ 200 dpi resolution) available from Hewlett-Packard Company Palo Alto, CA 94304 (650) 857-1501
Certified millimeter ruler (0.1 mm divisions)
Black cardboard paper
Image Pro Plus Software 4.0 or better avaiable from Media Cybernetics, Inc. Silver Spring, MD 20910 (301) -495-3305

Computer

Printer

Sample Preparation:

Cut cardboard frames made 4.75 inches x 4.75 inches (12 cm x 12 cm) on the outside with inside of the frames cut out, leaving a 1 inch (2.54 cm) cardboard perimeter. Cover the frame with double-sided tape (1" wide) (2.54 cm) and place the frame on a wound roll, sticky side down, centering it over the area to be measured. With the material attached, cut around the frame to remove it from the roll.

Data Collection - collecting image:

Lay ruler on scanner with millimeter side face down, then lay framed sample over ruler on scanner and finally lay black cardboard paper on top of sample. Scan image into scanner per scanner instruction making sure resolution set ≥ 200 dpi and then use zoom to adjust the area of interest. Save image as high resolution bitmap or other uncompressed image form.

Data Analysis Using Image Pro Software

Open and import the image into the Image Pro software per the instructions with the program. Calibrate the spacing of the picture using the image and ruler to set a pixel / mm value. Select the area of interest in the image and convert it to a greyscale. Adjust the grey scale ranges on the count sizes to highlight all the apertures after setting the software to aperture size and % open area. Note for aperture size do not include apertures that are on the edge of the sample or picture area that do not represent full apertures, while for the % open area these apertures should be included. The software will then calculated the average aperture size area and % open area.

**Examples**

Example of Laminate Substrate

In one non-limiting embodiment of a laminate substrate made in accordance with the present invention (as shown in Table I below), a four layer apertured laminate composite is formed from nonwoven webs. The four layer

composite is comprised of 2 outer layers which are polypropylene ("PP") carded nonwoven each of which has a basis weight of approximately 31 grams/$m^2$ (commercially available from BBA Nonwovens of Simpsonville, South Carolina under code number FPN336) and two inner layers which are wetlaid cellulose each of which has a basis weight of approximately 23 grams/$m^2$ (commercially available from Cellu Tissue Corporation of East Hartford, Connecticut under code number 7020 HWS). This four layer composite having a basis weight of approximately 97 grams/$m^2$ is commercially available from Precision Fabrics Group ("PFG") of Greensboro, North Carolina under style No. 36385000110000.

**Table I**

| Material (g/g) | Approx. Capacity (mg/$cm^2$) | Approx. Fuzz (mg/$cm^2$) | Approx. Caliper (mm) | CD* Dry Stiffness (g-cm) | CD* Wet Stiffness (g-cm) | Avg. Aperture Area ($mm^2$) | Open Area (%) |
|---|---|---|---|---|---|---|---|
| PFG 97 g/$m^2$ PP/ cellulose composite (Style 3638 50001 10000) | 4.4 | 0.09 | 1.11 | 1.38 | 0.47 | 0.76 | 6.9 |

*CD refers to the cross direction of the substrate sample.

In one non-limiting alternate embodiment, of a four layer laminate substrate, the substrate is comprised of 2 outer layers which are polypropylene ("PP") carded nonwoven (commercially available from BBA Nonwovens of Simpsonville, South Carolina under code number FPN336) and two inner layers of cellulose each of which is comprised of BOUNTY® towel (commercially available from the instant assignee).

<u>Non-Limiting Example of Liquid Cleaning Solutions Useful for the Wipes of the Present Invention</u>

| | Example 1 Wt% | Example 2 Wt% | Example 3 Wt% | Example 4 Wt% |
|---|---|---|---|---|
| C10 Alkylpolyglucoside[1] (SURFACTANT) | 0.05 | 0.05 | 0.05 | 0.05 |
| Polyethyleneimine[2] | 0.02 | 0.02 | 0.02 | 0.02 |
| Triethylene glycol monomethyl ether[3] | 1.0 | -- | -- | -- |
| Diethylene glycol monoethyl ether[3] | -- | 1.0 | -- | -- |
| Octyl pyrrolidone[4] | -- | -- | 1.0 | |
| Butyl polyglycol[5] | -- | -- | -- | 1.0 |
| Polyethyleneimine 600 ethoxylated (20 mol) per nitrogen[10] | 0.05 | 0.05 | 0.05 | 0.05 |
| Ethoxylated castor oil[11] | 0.01 | 0.01 | 0.01 | 0.01 |
| Diethylenetriamine pentaacetic acid[12] | 0.1 | 0.1 | 0.1 | 0.1 |
| Perfume | 0.3 | 0.3 | 0.3 | 0.3 |
| Suds suppressors, preservative and other minor ingredients | 0.1 | 0.1 | 0.1 | 0.1 |
| Water | To 100% | To 100% | To 100% | To 100% |

| | Example 5 Wt% | Example 6 Wt% | Example 7 Wt% | Example 8 Wt% |
|---|---|---|---|---|
| C10 Alkylpolyglucoside[1] | 0.05 | 0.05 | 0.05 | 0.05 |
| Polyvinyl formamide co-vinylamine[6] | 0.02 | -- | -- | -- |
| Polydimethyldiallylammoniumchloride[7] | -- | 0.02 | | -- |
| Cationic guar gum[8] | -- | -- | 0.02 | -- |
| Setleze 3000[9] | -- | -- | -- | 0.02 |

(continued)

| | Example 5 Wt% | Example 6 Wt% | Example 7 Wt% | Example 8 Wt% |
|---|---|---|---|---|
| Triethylene glycol monomethyl ether[3] | 1.0 | 1.0 | 1.0 | -- |
| Polyethyleneimine 600 ethoxylated (20 mol) per nitrogen[10] | 0.05 | 0.05 | 0.05 | 0.05 |
| Ethoxylated castor oil[11] | 0.01 | 0.01 | 0.01 | 0.01 |
| Diethylenetriamine pentaacetic acid[12] | 0.1 | 0.1 | 0.1 | 0.1 |
| Perfume | 0.3 | 0.3 | 0.3 | 0.3 |
| Suds suppressors, preservative and other minor ingredients | 0.1 | 0.1 | 0.1 | 0.1 |
| Water | To 100% | To 100% | To 100% | To 100% |

1 Surfactant supplied by Cognis Corp of Cincinnati, OH under the trade name Plantaren.
2 Cationic flocculating polymer supplied by BASF AG, under the trade name Lupasol SK having a molecular weight of 2,000,000.
3. Non-volatile solvent supplied by Dow Chemicals, Midland MI
4: Non-volatile solvent supplied by International Specialty Products, Wyane, NJ
5 Non-volatile solvent supplied by Clariant GmbH of Gendorf, Germany
6: Cationic flocculating polymer supplied by BASF AG having a molecular weight of 25,000.
7: Cationic flocculating polymers supplied by Calgon Corporation under the trade name Merquat 100 having a molecular weight of 10,000.
8: Cationic flocculating polymer available as N-Hance 3000 and commercially supplied by Aqualon Co of Wilmington, Delaware having a molecular weight of 1,000,000.
9: Copolymer of vinyl pyrrolidone and dimethyaminoethylmethacrylamide supplied by International Specialty Products of Wayne, New Jersey.
10: Soil suspending agent.
11:Solubilizer.
12: Chelating agent.

The liquid composition is prepared by mixing the ingredients followed by adjusting the pH to 6.5 to 7.5 with a suitable acid/alkali. It is applied to the laminate substrate such that it is thoroughly wetted.

Example 8

An apertured laminate substrate PFG-97 gsm PP/cellulose composite (Style 3638 50001 010000) is moistened with the liquid cleaning solution from Example 1. The liquid is thoroughly distributed to achieve the loading of 4.3 g of liquid per gram of dry substrate.

Example 9

An apertured laminate substrate PFG-97 gsm PP/cellulose composite (Style 3638 50001 010000) is moistened with the liquid cleaning solution from Example 2. The liquid is thoroughly distributed to achieve the loading of 4.3 g of liquid per gram of dry substrate.

Example 10

An apertured laminate substrate PFG-97 gsm PP/cellulose composite (Style 3638 50001 010000) is moistened with the liquid cleaning solution from Example 3. The liquid is thoroughly distributed to achieve the loading of 4.3 g of liquid per gram of dry substrate.

Example 11

An apertured laminate substrate PFG-97 gsm PP/cellulose composite (Style 3638 50001 010000) is moistened with the liquid cleaning solution from Example 4. The liquid is thoroughly distributed to achieve the loading of 4.3 g of liquid per gram of dry substrate.

Example 12

An apertured laminate substrate PFG-97 gsm PP/cellulose composite (Style 3638 50001 010000) is moistened with the liquid cleaning solution from Example 5. The liquid is thoroughly distributed to achieve the loading of 4.3 g of liquid per gram of dry substrate.

Example 13

An apertured laminate substrate PFG-97 gsm PP/cellulose composite (Style 3638 50001 010000) is moistened with the liquid cleaning solution from Example 6. The liquid is thoroughly distributed to achieve the loading of 4.3 g of liquid per gram of dry substrate.

Example 14

An apertured laminate substrate PFG-97 gsm PP/cellulose composite (Style 3638 50001 010000) is moistened with the liquid cleaning solution from Example 7. The liquid is thoroughly distributed to achieve the loading of 4.3 g of liquid per gram of dry substrate.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention. The citation of any document is not to be construed as an admission that it is prior art with respect to the present invention.

## Claims

**1.** A premoistened disposable wipe for cleaning household fabric-based materials, said wipe comprising:

a) a layered laminate substrate; wherein the laminate substrate is non-woven and wherein said layered laminate substrate is comprised of at least one hydrophobic outer layer and at least one hydrophilic inner layer;
b) a composition, said composition comprising:

i) from 0.001 % to 0.5% by weight of a flocculating polymer; having one net cationic change at pH = 7; and being irreversibly adsorbed on the non-woven substrate;
ii) from 0.25% to 15% by weight of a non-volatile organic solvent;
iii) optionally from 0.001% to 2% by weight of a detersive surfactant; and
iv) balance water; and

wherein said layered laminate substrate has a fuzz level of less than 0.8 $mg/cm^2$, liquid holding capacity of from 1 gram of liquid/gram of substrate to 10 grams of liquid/gram of substrate and a wet CD stiffness value of from 0.05 g-cm to 2 g-cm, wherein said layered laminate substrate includes one or more apertures, wherein said layered laminate substrate is comprised of three or more layers, and wherein said non-volatile organic solvent has a vapour pressure of less than 0.1 mm of mercury at 20°C and wherein said non-volatile solvent has a boiling point of at least 230°C.

**2.** The premoistened disposable wipe of Claim 1, wherein the average area of said aperture is from 0.1 mm2 to 4 mm2, preferably wherein said layered laminate substrate has a % open area of from 2% to 25%.

**3.** The premoistened disposable wipe of Claim 1 or 2, wherein said hydrophobic outer layer is comprised of polypropylene, polyester, or a combination thereof and wherein said hydrophilic inner layer is comprised of wood pulp, rayon, or a combination thereof.

**4.** A method for cleaning fabric, said method comprising:

a) contacting said fabric with a premoistened disposable wipe according to claim 1; and
b) transferring dirt and contaminants from said fabric to said wipe.

**5.** A kit for cleaning household fabric-based surfaces, said kit comprising:

a) a premoistened disposable wipe for cleaning household surfaces, according to claim 1; and
b) an implement to which said premoistened disposable wipe is attached for facilitating contact of said premoistened disposable wipe to said household surface.

**Patentansprüche**

**1.** Vorbefeuchtetes Einweg-Wischtuch zum Reinigen von Haushaltsmaterialien auf Stoffbasis, wobei das Wischtuch Folgendes umfasst:

a) ein geschichtetes Laminatsubstrat, wobei das Laminatsubstrat ein Vliesstoff ist und wobei das geschichtete Laminatsubstrat aus mindestens einer hydrophoben Außenschicht und mindestens einer hydrophilen Innenschicht besteht,
b) eine Zusammensetzung, wobei die Zusammensetzung Folgendes umfasst:

I) zu 0,001 Gew.-% bis 0,5 Gew.-% ein Flockungspolymer, das eine kationische Nettoladung bei einem pH-Wert von 7 aufweist und das irreversibel an das Vliesstoffsubstrat adsorbiert ist,
II) zu 0,25 Gew.-% bis 15 Gew.-% ein nichtflüchtiges organisches Lösemittel,
III) wahlweise zu 0,001 Gew.-% bis 2 Gew.-% ein Reinigungstensid, und
IV) als Rest Wasser, und

wobei das geschichtete Laminatsubstrat einen Flaumgrad von weniger als 0,8 $mg/cm^2$, ein Flüssigkeitshaltevermögen von 1 Gramm Flüssigkeit/Gramm Substrat bis 10 Gramm Flüssigkeit/Gramm Substrat und einen CD-Nasssteifigkeitswert von 0,05 g-cm bis 2 g-cm aufweist, wobei das geschichtete Laminatsubstrat eine oder mehrere Öffnungen umfasst, wobei das geschichtete Laminatsubstrat aus drei oder mehr Schichten besteht, und wobei das nichtflüchtige organische Lösungsmittel einen Dampfdruck von weniger als 13,3 Pa (0,1 mm Quecksilber) bei 20 °C aufweist und wobei das nichtflüchtige organische Lösungsmittel einen Siedepunkt von mindestens 230 °C aufweist.

**2.** Vorbefeuchtetes Einweg-Wischtuch nach Anspruch 1, wobei der durchschnittliche Bereich der Öffnung 0,1 $mm^2$ bis 4 $mm^2$ beträgt, wobei vorzugsweise das geschichtete Laminatsubstrat einen prozentualen offenen Bereich von 2 % bis 25 % aufweist.

**3.** Vorbefeuchtetes Einweg-Wischtuch nach Anspruch 1 oder 2, wobei die hydrophobe Außenschicht aus Polypropylen, Polyester oder einer Kombination davon besteht und wobei die hydrophile Innenschicht aus Holzfaserstoff, Rayon oder einer Kombination davon besteht.

**4.** Verfahren zum Reinigen von Stoff, wobei das Verfahren Folgendes umfasst:

a) Inkontaktbringen des Stoffes mit einem vorbefeuchteten Einweg-Wischtuch nach Anspruch 1 und
b) Übertragen von Schmutz und Verunreinigungen von dem Stoff auf das Wischtuch.

**5.** Set zum Reinigen von Haushaltsoberflächen auf Stoffbasis, wobei das Set Folgendes umfasst:

a) ein vorbefeuchtetes Einweg-Wischtuch zum Reinigen von Haushaltsoberflächen nach Anspruch 1 und
b) ein Gerät, an dem das vorbefeuchtete Einwegtuch befestigt ist, um den Kontakt des vorbefeuchteten Einwegtuchs mit der Haushaltsoberfläche zu erleichtern.

**Revendications**

**1.** Lingette jetable préimprégnée pour nettoyer des matériaux ménagers à base de tissu, ladite lingette comprenant :

a) un substrat stratifié en couches ; dans laquelle le substrat stratifié est non tissé et dans laquelle ledit substrat stratifié en couches est constitué d'au moins une couche externe hydrophobe et d'au moins une couche interne hydrophile

b) une composition, ladite composition comprenant :

i) de 0,001 % à 0,5 % en poids d'un polymère de floculation ; ayant une charge cationique nette à un pH = 7; et étant adsorbée de manière irréversible sur un substrat non tissé ;
ii) de 0,25 % à 15 % en poids d'un solvant organique non volatil ;
iii) facultativement de 0,001 % à 2 % en poids d'un agent tensioactif détersif ; et
iv) le complément d'eau ; et

dans laquelle ledit substrat stratifié en couches a un niveau de peluches de moins de 0,8 $mg/cm^2$, une capacité de rétention de liquide allant de 1 gramme de liquide/gramme de substrat à 10 grammes de liquide/gramme de substrat et une valeur de rigidité humide dans le sens travers allant de 0,05 g-cm à 2 g-cm, dans laquelle ledit substrat stratifié en couches inclut une ou plusieurs ouvertures, dans laquelle ledit substrat stratifié en couches est constitué de trois couches ou plus, et dans laquelle ledit solvant organique non volatil a une pression de vapeur inférieure à 13,3 Pa (0,1 mm de mercure) à 20 °C et dans laquelle ledit solvant non volatil a un point d'ébullition d'au moins 230 °C.

**2.** Lingette jetable préimprégnée selon la revendication 1, dans laquelle l'aire moyenne de ladite ouverture va de 0,1 $mm^2$ à 4 $mm^2$, de préférence dans laquelle ledit substrat stratifié en couches a un pourcentage de surface ouverte allant de 2 % à 25 %.

**3.** Lingette jetable préimprégnée selon la revendication 1 ou 2, dans laquelle ladite couche externe hydrophobe est constituée de polypropylène, polyester, ou une de leur combinaison et dans laquelle ladite couche interne hydrophile est constituée de pâte de bois, de rayonne, ou une de leur combinaison.

**4.** Procédé pour nettoyer un tissu, ledit procédé comprenant :

a) la mise en contact dudit tissu avec une lingette jetable préimprégnée selon la revendication 1 ; et
b) le transfert de la saleté et des contaminants dudit tissu sur ladite lingette.

**5.** Trousse pour nettoyer des surfaces ménagères à base de tissu, ladite trousse comprenant :

a) une lingette jetable préimprégnée pour nettoyer des surfaces ménagères, selon la revendication 1 ; et
b) un instrument auquel ladite lingette jetable préimprégnée est fixée pour faciliter le contact de ladite lingette jetable préimprégnée à ladite surface ménagère.

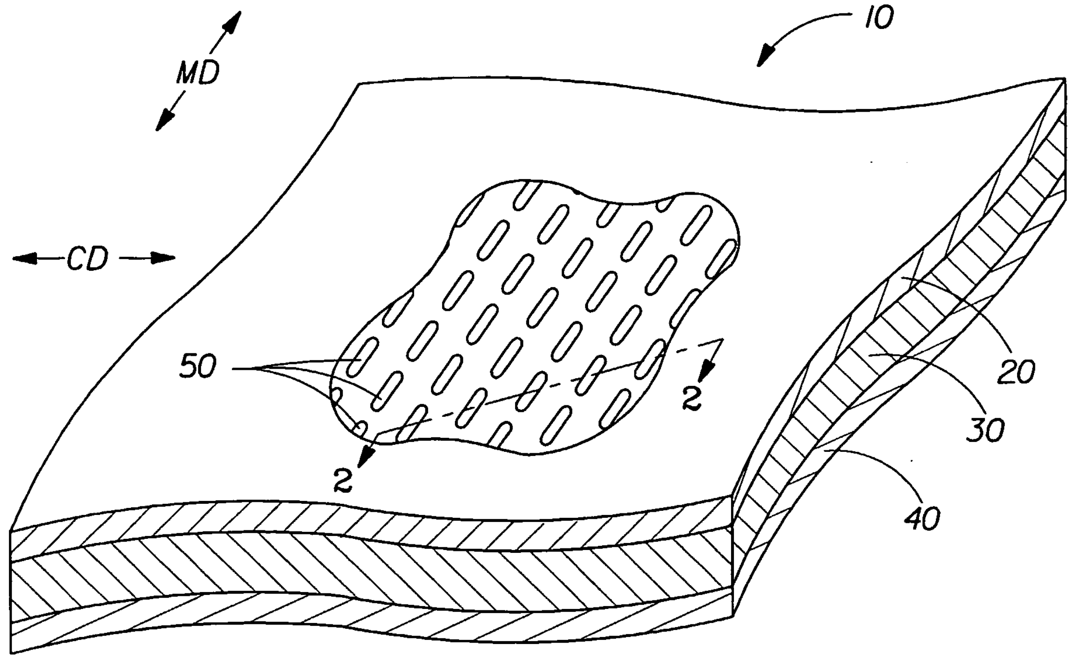


Fig. 1

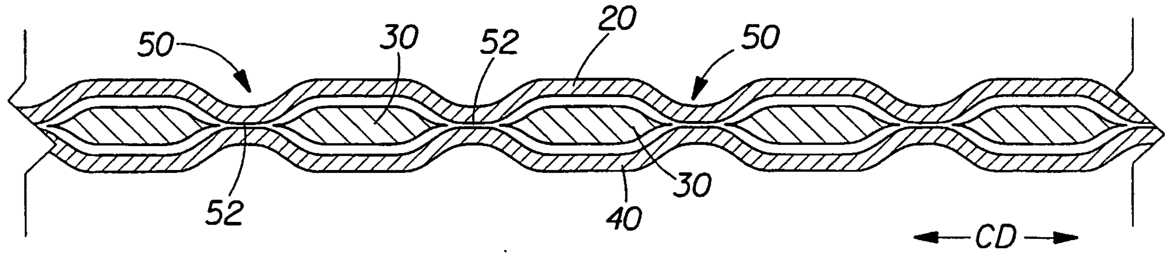


Fig. 2

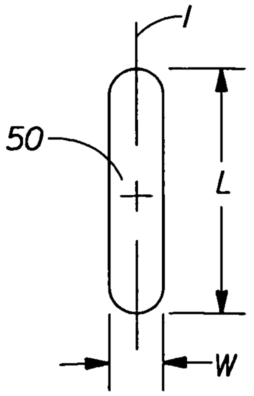


Fig. 3

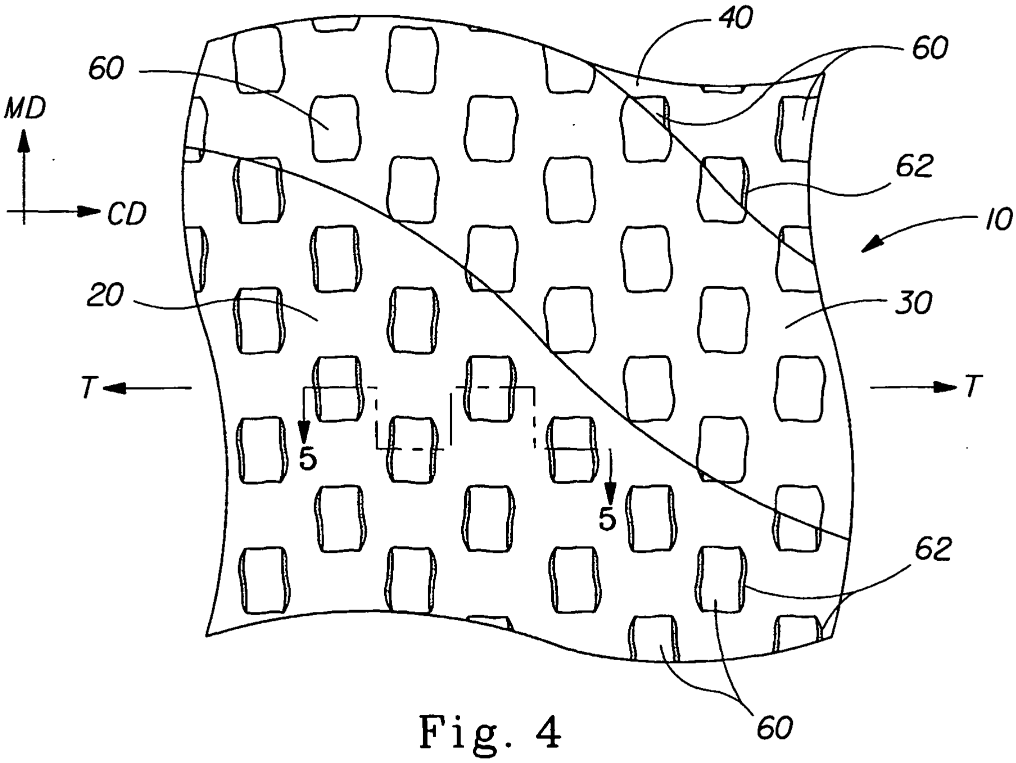


Fig. 4

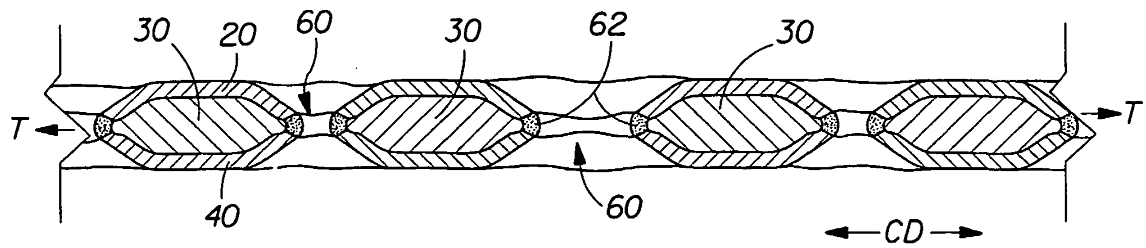


Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0145615 A
- US 20030028165 A
- US 20020034912 A
- US 3855046 A
- US 5620779 A
- US 3354022 A
- US 68581505 P
- US 3664961 A, Norris
- US 3919678 A, Laughlin
- US 4222905 A, Cockreil
- US 4239659 A, Murphy
- US 6150322 A
- US 6153577 A
- US 6020303 A
- US 6093856 A
- US 4565647 A, Llenado
- US 4483780 A
- US 4483779 A
- US 5332528 A
- WO 9206162 A
- WO 9319146 A
- WO 9319038 A
- WO 9409099 A
- US 6482994 B
- WO 0142408 A
- US 5776872 A
- US 5883059 A
- US 5883062 A
- US 5906973 A
- WO 8605199 A
- US 2965576 A, Wilson
- US 2703798 A, Schwartz
- US 3929678 A, Laughlin
- US 6060443 A
- US 6008181 A
- WO 9905243 A
- WO 9905242 A
- WO 9905244 A
- WO 9905082 A
- WO 9905084 A
- WO 9905241 A
- WO 9907656 A
- WO 0023549 A
- WO 0023548 A
- US 6136769 A
- US 6004922 A
- WO 9835002 A
- WO 9835003 A
- WO 9835004 A
- WO 9835005 A
- WO 9835006 A
- US 4228042 A
- US 4239660 A
- US 4260529 A
- US 6022844 A
- US 6221825 B
- WO 0047708 A
- WO 0132816 A
- US 4681704 A
- US 4133779 A
- US 67044005 P
- US 20020119720 A


### Non-patent literature cited in the description


- *Journal of Macromolecular Science-Chemistry,* October 1970, vol. A4 (6), 1327-1417
- Pulp and Paper, Chemistry and Chemical Technology. 1981, vol. III
- Wet Strength resins and their applications. TAPPI Press, 1994
- **D. B. SOLAREK.** Modified Starches, Properties and Uses published. CRC Press, 1986